# FASCICULE DE BREVET EUROPEEN

(11) **EP 2 365 914 B1**
(45) Date de publication et mention de la délivrance du brevet: **17.07.2013**
(21) Numéro de dépôt: 09803812.8
(22) Date de dépôt: 07.12.2009
(51) Int. Cl.: B60J 10/08, B60J 10/00

(54) **JOINT D'ETANCHEITE POUR PORTIERE DE VEHICULE**
DICHTUNG FÜR KFZ-TÜR
SEAL FOR VEHICLE DOOR

(30) Priorité: 08.12.2008 FR 0858336
(43) Date de publication de la demande: 21.09.2011
(73) Titulaire: Cooper-Standard Automotive France S.A., 95100 Argenteuil (FR)
(72) Inventeur: STEFANELLI, Didier, F-35210 Saint Christophe Des Bois (FR); VEILLE, Jean-Marc, F-35000 Rennes (FR); GUIZOUARN, Vincent, F-35410 Domloup (FR)
(74) Mandataire: Intès, Didier Gérard André
(86) Numéro de dépôt international: PCT/FR2009/052426
(87) Numéro de publication internationale: WO 2010/066993

(56) Documents cités:
- DE-B3-102004 012 510
- JP-A- 2006 056 301
- US-A1- 2002 112 405
- US-A1- 2005 178 069

## Description

La présente invention concerne le domaine des joints d'étanchéité de portières.

Lors d'averses, l'eau risque de pénétrer dans le véhicule à l'interface entre la portière et le cadre de la carrosserie entourant la portière. Il est donc nécessaire d'assurer l'étanchéité à cette interface. Pour ce faire, on entoure le bord de la portière d'un joint.

Une portière de véhicule est en contact avec plusieurs parties distinctes du véhicule : le bord supérieur de la portière est en contact avec le bord du toit du véhicule, les montants latéraux sont en contact avec un bord de la carrosserie, et le bord inférieur de la portière est en contact avec le bord du plancher du véhicule. Les géométries de ces zones de contact sont différentes, et en outre l'eau de pluie aura tendance à s'accumuler à l'interface entre la portière et le toit. Afin d'assurer correctement l'étanchéité à toutes ces interfaces, il est donc nécessaire que la géométrie du joint entourant la portière varie le long de sa circonférence.

On connait aussi le document US 2002/0112405 qui décrit un joint d'étanchéité qui comprend une base fixée sur le montant de la portière à l'aide de clips à intervalles donnés, une lèvre destinée à stopper l'eau qui est située à l'extrémité extérieure de la base, et un élément solide composé d'un élastomère ou équivalent, qui est plus rigide que le matériau de la base, et qui est noyé dans l'extrémité extérieure de la base de façon à s'étendre selon la direction longitudinal de celle-ci.

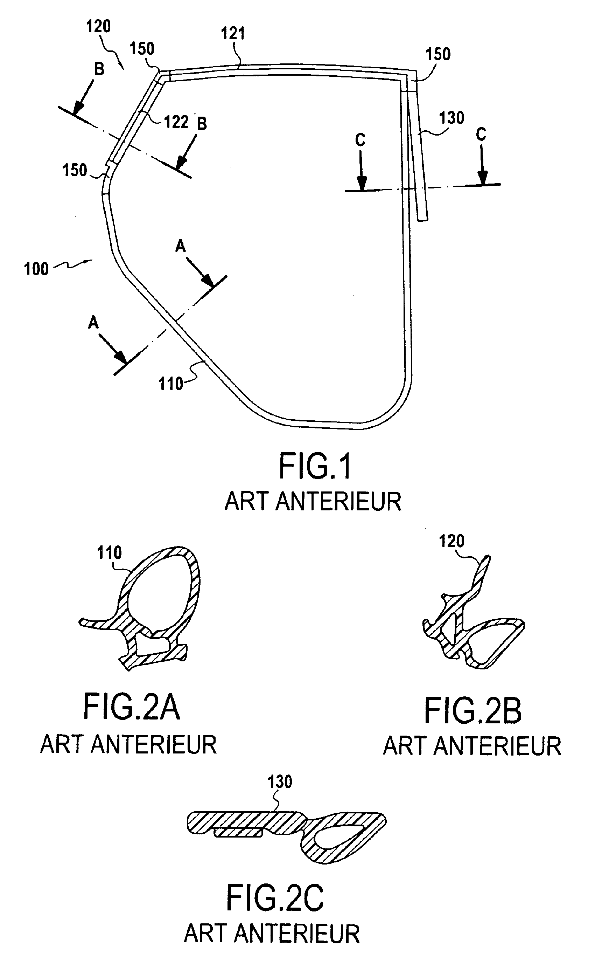

La figure 1 illustre un tel joint selon l'état de la technique, qui équipe une portière arrière d'un véhicule automobile. Ce joint 100 est composé de plusieurs segments extrudés qui sont joints entre eux par des raccords moulés. Ainsi, le joint 100 comprend un premier segment 110 qui s'étend depuis le coin supérieur du montant latéral avant de la portière (non représentée) vers le bas le long de ce montant, puis le long du bord inférieur de la portière, puis remonte sensiblement jusqu'au milieu du montant latéral arrière de la portière (le joint étant représenté tel qu'en place autour de la portière). Depuis cette extrémité du premier segment au milieu de ce montant latéral, un deuxième segment 120 remonte le long de ce montant latéral arrière jusqu'au bord supérieur de la portière, puis le long de ce bord supérieur jusqu'au coin supérieur du montant latéral avant de la portière où ce second segment 120 rejoint l'autre extrémité du premier segment 110.

Le deuxième segment 120 est constitué de deux sous-segments, un premier sous-segment 121 qui s'étend le long du bord supérieur de la portière, et un second sous-segment 122 qui s'étend le long du montant latéral arrière de la portière jusqu'au bord supérieur de la portière.

Un troisième segment 130 se raccorde au coin supérieur du montant latéral avant de la portière et s'étend vers le bas le long du premier segment 110. Ce troisième segment 130 confère une étanchéité supplémentaire entre la portière arrière et le montant séparant la portière arrière et la portière avant du véhicule, à l'interface desquelles il se situe.

Afin de joindre entre eux ces segments et sous-segments de façon étanche, trois raccords moulés 150 sont donc nécessaires, à l'interface du premier segment 110, du premier sous-segment 121, et du troisième segment 130, à l'interface du premier sous-segment 121 et du second sous-segment 122, et à l'interface du second sous-segment 122 et du premier segment 110.

Les figures 2A, 2B, et 2C représentent respectivement une section du premier segment 110 (prise le long de la ligne AA de la figure 1), une section du deuxième segment 120 (prise le long de la ligne BB de la figure 1), une section du troisième segment 130 (prise le long de la ligne CC de la figure 1). Ces sections sont toutes nécessairement différentes, afin d'accommoder les géométries différentes des zones de contact le long du bord de la portière arrière.

On comprend donc que la réalisation d'un joint étanche autour d'une telle portière implique la fabrication de quatre segments extrudés de sections différentes et de trois raccords moulés. La réalisation de tels joints est donc compliquée et nécessite plusieurs étapes d'assemblage, donc des coûts plus élevés.

La présente invention vise à remédier à ces inconvénients.

L'invention vise à proposer un nouveau type de joint d'étanchéité de portière qui permette de faciliter la fabrication du joint d'étanchéité, et de diminuer les coûts de fabrication.

Ce but est atteint grâce au fait que le joint d'étanchéité comprend un brin extrudé flexible s'étendant au moins le long d'une partie de la portière lorsque cette portière est fermée, ce joint comprenant en outre un brin supplémentaire situé sur le bord supérieur de la portière et comportant une partie rigide et une partie souple, la partie souple comportant une première lèvre apte à s'appuyer sur la portière et une seconde lèvre apte à s'appuyer sur le bord du cadre entourant la portière lorsque cette portière est fermée, la première et la seconde lèvre formant une gouttière apte à évacuer un fluide vers les extrémités du bord supérieur de la portière, de telle sorte que l'étanchéité entre cette portière et ce cadre est maintenue.

Grâce à ces dispositions, la fabrication du joint d'étanchéité est facilitée, puisqu'il n'est plus nécessaire de raccorder des segments de brins entre eux. L'étanchéité entre la portière et le cadre l'entourant est également améliorée, la première et la seconde lèvre permettant une double étanchéité et empêchant l'eau de stagner entre la portière et son cadre.

Avantageusement, le brin supplémentaire est un brin bi-injecté définissant la partie rigide et la partie souple.

Ainsi, la fabrication du joint d'étanchéité est encore facilitée.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue de face d'un joint d'étanchéité de portière selon l'art antérieur,
- la figure 2A est une section selon la ligne A-A d'un joint d'étanchéité de portière de la figure 1,
- la figure 2B est une section selon la ligne B-B d'un joint d'étanchéité de portière de la figure 1,
- la figure 2C est une section selon la ligne C-C d'un joint d'étanchéité de portière de la figure 1,
- la figure 3 est une vue d'un joint d'étanchéité de portière selon l'invention,
- la figure 4 est une section selon la ligne IV-IV d'un joint d'étanchéité de portière de la figure 3,
- la figure 5 est une vue d'un joint d'étanchéité de portière selon un autre mode de réalisation de l'invention,
- la figure 6 est une section selon la ligne VI-VI d'un joint d'étanchéité de portière de la figure 5,
- la figure 7 est une section d'un joint d'étanchéité de portière selon l'invention montrant le mécanisme de fixation par clips dudit joint sur la portière,
- la figure 8 est une vue en perspective d'un clip utilisé pour fixer un joint d'étanchéité de portière selon l'invention,
- la figure 9 est une vue en perspective d'une extrémité d'un joint d'étanchéité de portière selon l'invention.

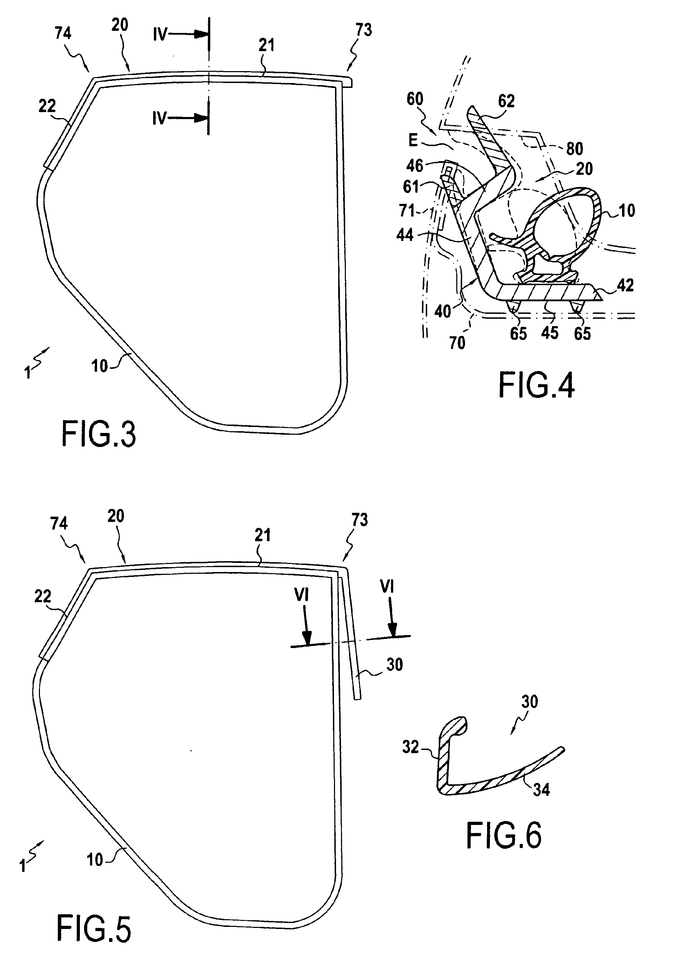

La figure 3 montre un joint 1 selon l'invention. Le joint 1 comprend un brin extrudé 10 flexible qui s'étend sur tout le tour de la portière (non représentée). Dans le cas représenté il s'agit d'une portière arrière d'un véhicule. Le joint 1 comprend également un brin supplémentaire 20, qui est par exemple un brin bi-injecté 20. Ce brin bi-injecté 20 comprend un premier segment 21 qui s'étend le long du bord supérieur de la portière depuis le coin supérieur avant 73 de la portière jusqu'au coin supérieur arrière 74 de la portière, et un deuxième segment 22 qui prolonge la première partie 21 et qui s'étend depuis le coin supérieur arrière 74 le long du haut du montant latéral arrière de la portière, parallèlement au brin extrudé 10.

Le joint 1 est représenté tel que positionné autour de la portière, dans le cas où le brin extrudé 10 flexible est monté sur la portière.

Alternativement, le brin extrudé 10 flexible est monté sur le bord du cadre 80 entourant la portière. Lorsque la portière est fermée, le brin extrudé 10 flexible s'étend ainsi le long d'une partie ou de tout le tour de la portière.

Le brin bi-injecté 20 comporte une partie rigide 40 et une partie souple 60, qui longent donc chacune le bord supérieur 70 de la portière dans une direction longitudinale, le coin supérieur arrière 74 de la portière, puis le montant latéral arrière de la portière. A l'extrémité inférieure du deuxième segment 22 et au coin supérieur avant 73 de la portière, la partie rigide 40 se prolonge sur toute sa section par une partie souple qui fusionne avec la partie souple 60.

Si le brin bi-injecté 20 ne comporte pas de deuxième segment 22 mais uniquement un premier segment 21, alors à l'extrémité du brin bi-injecté 20 au niveau du coin supérieur arrière 74, la partie rigide 40 se prolonge sur toute sa section par une partie souple qui fusionne avec la partie souple 60.

La figure 4 est une section transversale du joint 1 dans sa partie supérieure, dans un plan perpendiculaire à la direction longitudinale, qui montre la position respective de la partie rigide 40 et de la partie souple 60. La partie rigide 40 comprend une portion de contact 42 qui est destinée à être placée contre le bord supérieur 70 de la portière et à être recouverte par le brin extrudé flexible. La portion de contact 42 s'étend transversalement parallèlement au bord supérieur 70 de la portière. La face inférieure 45 de la portion de contact 42 est en regard du bord supérieur 70 de la portière. Afin d'assurer une meilleure étanchéité entre le brin bi-injecté 20 et le bord supérieur 70 de la portière, la face inférieure 45 de la portion de contact 42 porte deux excroissances souples 65 longitudinales qui s'étendent longitudinalement. Ces excroissances souples 65 font partie de la partie souple 60 du brin bi-injecté. Les excroissances souples 65 viennent en contact tout le long du bord supérieur 70 de la portière et du montant latéral arrière de la portière, formant ainsi deux lignes d'étanchéité qui servent à empêcher l'eau de pénétrer à l'intérieur du véhicule.

La portion de contact 42 se prolonge par une portion intermédiaire 44, qui se prolonge elle-même par une portion supérieure 46, de telle sorte que la partie rigide 40 a sensiblement la forme d'un "C". A celle de ses extrémités qui rejoint la portion intermédiaire 44, la portion supérieure 46 porte une première lèvre souple 61 de la partie souple 60, apte à s'appuyer sur l'extrémité supérieure 71 du bord supérieur 70 de la portière lorsque le joint 1 est en position sur la portière. A son autre extrémité, la portion supérieure 46 porte une seconde lèvre souple 62 de la partie souple 60, apte à s'appuyer sur le bord inférieur du cadre 80 entourant la portière lorsque cette portière est fermée.

La première lèvre 61 et la seconde lèvre 62 s'étendent dans une direction longitudinale le long du bord supérieur de la portière, et sont décalées l'une par rapport à l'autre dans un plan perpendiculaire à cette direction longitudinale, comme représenté sur la figure 4. La première lèvre 61 et la seconde lèvre 62 sont donc séparées par la largeur de la portion supérieure 46. Ainsi, la première lèvre 61, la seconde lèvre 62, et la portion supérieure 46 forment une gouttière sensiblement en forme de "U" qui s'étend sur tout le premier segment 21, à savoir le long du bord supérieur de la portière. Cette gouttière peut se prolonger le long du deuxième segment 22.

Le brin bi-injecté 20 est positionné de telle sorte que la première lèvre 61 se déforme en s'appuyant contre l'extrémité supérieure 71 du bord supérieur 70 de la portière, et que la seconde lèvre 62 se déforme en s'appuyant sur le bord du cadre 80 entourant la portière lorsque cette portière est fermée. Ainsi, la gouttière ferme l'espace E entre l'extrémité supérieure 71 du bord supérieur 70 de la portière et le bord du cadre 80 entourant la portière de façon étanche, et cette gouttière est donc apte à évacuer l'eau de pluie vers les extrémités du bord supérieur de la portière. De cette façon, l'étanchéité entre la portière et ce cadre est maintenue, et l'eau ne pénètre pas dans le véhicule lorsqu'il pleut.

La figure 5 représente une vue de face d'un autre mode de réalisation d'un joint d'étanchéité selon l'invention. Ce joint d'étanchéité est identique à celui du premier mode de réalisation (figure 3), à l'exception du fait qu'une extrémité du brin bi-injecté (20) se prolonge par un troisième segment 30 qui prolonge la partie souple 60 du brin bi-injecté 20 et qui longe un des montants de la portière. Ainsi, le troisième segment 30 prolonge la partie souple du premier segment 21 à partir du coin supérieur avant 73 de la portière en s'étendant vers le bas de façon à longer le haut du montant latéral avant de la portière. Ce troisième segment 30 confère une étanchéité supplémentaire entre la portière arrière et ce montant latéral avant séparant la portière arrière et la portière avant la portière avant du véhicule, à l'interface desquelles il se situe.

Le troisième segment 30 peut être réalisé par moulage simultané avec le brin bi-injecté 20, ou alors moulé ou extrudé séparément puis ajouté dans le moule où s'effectue le moulage du brin bi-injecté 20 avant le moulage de ce dernier.

La figure 6 est une section transversale du troisième segment 30. Ce troisième segment comprend une portion de contact 32, qui se prolonge perpendiculairement à une extrémité transversale par une lèvre 34 de troisième segment 30. Lorsque la portière portant le joint 1 est fermée, la portion de contact 32 du troisième segment 30 vient en appui sur le montant latéral avant de la portière, et la lèvre 34 de troisième segment 30 vient en appui contre le montant latéral de la portière avant.

La portion de contact 42 de la partie rigide du brin bi-injecté 20 doit être maintenue contre le bord supérieur 70 de la portière. Le brin extrudé 10, qui serre par élasticité la portion de contact 42 contre le bord supérieur 70 de la portière, y contribue. Ce serrage est cependant insuffisant. En supplément, la portion de contact 42 est fixée sur le bord supérieur 70 de la portière par une liaison mécanique.

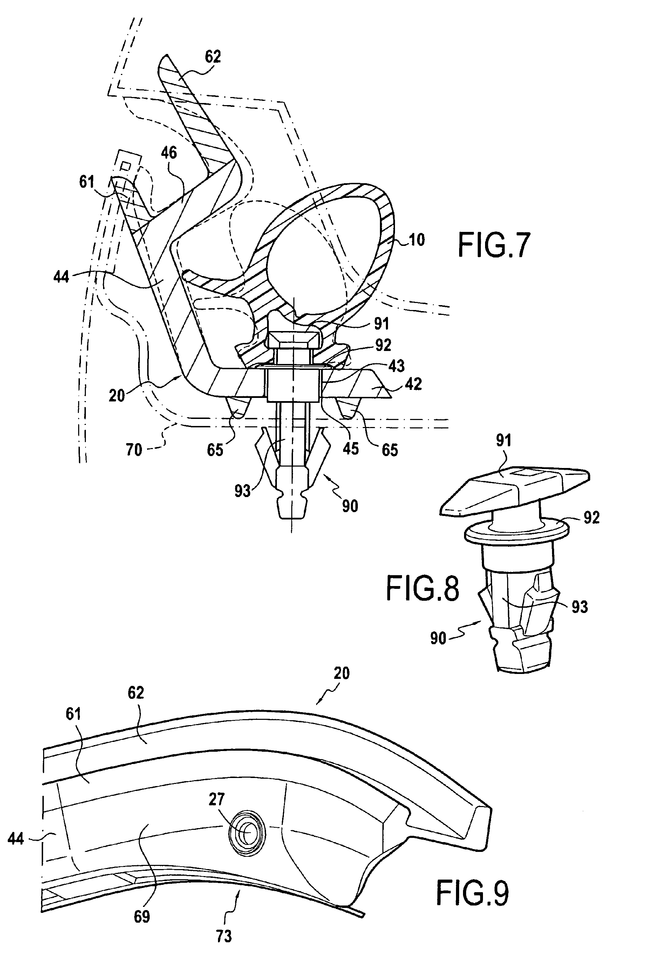

La figure 7 montre un exemple d'une telle liaison. La portion de contact 42 est percée de trous 43 répartis sur sa longueur, c'est à dire autour de la portière. Ces trous 43 sont destinés à recevoir des clips 90 aptes à maintenir la portion de contact 42 (ou les excroissances 65 si la portion de contact 42 en comporte) plaquée contre le bord supérieur 70 de la portière, et aptes à maintenir le brin extrudé 10 contre la portion de contact.

Pour cela, on insère la tête 91 de chaque clip 90 dans des trous percés dans le brin extrudé 10. La tête 91 de chaque clip 90 a une forme oblongue (voir figure 8), et sa plus grande dimension est placée dans le sens longitudinal du brin extrudé 10 de façon à ce que le clip 90 soit solidaire du brin extrudé 10.

Ensuite on enfonce le corps 93 de chaque clip 90 dans les trous 43, puis dans des trous percés dans le bord supérieur 70. L'extrémité du corps 93 comprend des ailettes qui viennent bloquer le clip 90 pour l'empêcher d'être extrait une fois enfoncé. Le clip 90 est muni, en dessous de sa tête 91, d'une collerette 92 dont le diamètre est supérieur au diamètre des trous 43. Ainsi, cette collerette 92 appuie sur la portion de contact 42 (plus précisément la collerette 92 appuie sur la face supérieure de la portion de contact 42, qui se situe à l'opposé de la face inférieure 45 de la portion de contact 42), et maintient donc, conjointement avec les ailettes 90, cette portion de contact 42 contre le bord supérieur 70 de la portière.

Alternativement, la portion de contact 42 comprend des éléments en forme de clips aptes à maintenir la portion de contact 42 plaquée contre le bord supérieur 70 de la portière, et aptes à maintenir le brin extrudé 10 contre la portion de contact. Ces clips ont la même forme que les clips 90 décrits plus haut, mais sont moulés avec la partie rigide 40 du brin bi-injecté 20. Le brin extrudé 10 est placé sur les têtes de ces clips qui sont ensuite fixés dans le bord supérieur 70 de la portière comme précédemment.

Alternativement, ou conjointement, la portion de contact 42 de la partie rigide 40 du brin bi-injecté 20 est collée contre le bord supérieur 70 de la portière.

La portion de contact 42 peut être collée, ou à la fois collée et maintenue par une liaison mécanique, sur le bord supérieur 70 de la portière.

Une liaison mécanique, par exemple réalisée au moyen des clips 90, est suffisante pour maintenir seule le brin bi-injecté 20 fixé sur le bord supérieur 70 de la portière. Cela est en particulier le cas lorsque le le brin extrudé 10 flexible est monté sur le bord du cadre 80 entourant la portière.

Le brin bi-injecté 20 comporte des moyens de positionnement qui aident de positionner ce brin bi-injecté 20 sur la portière.

La figure 9 montre un tel exemple de moyens de positionnement. La partie du brin bi-injecté 20 destinée à être placée en regard du coin supérieur avant 73 et l'extrémité du brin bi-injecté 20 destinée à être placé vers l'arrière de la portière sont munis d'orifices 27 aptes à recevoir un outil servant à positionner le brin bi-injecté 20 sur la portière.

On a vu plus haut qu'à l'extrémité du brin bi-injecté 20 destinée à être placé vers l'arrière de la portière (cette extrémité se situe au niveau du coin supérieur arrière 74 de la portière si le brin bi-injecté ne comporte pas de deuxième segment 22, et à l'extrémité inférieure du deuxième segment 22 si le brin bi-injecté comporte ce deuxième segment 22) et au niveau du coin supérieur avant 73 de la portière, la partie rigide 40 se prolonge par une portion 69 de partie souple 60 sur toute sa section. Les orifices 27 sont donc moulés dans ces parties souples 69 du brin-injecté 20, comme représenté sur la figure 9, par exemple dans la région de ces parties souples 69 qui prolonge la portion intermédiaire 44.

Alternativement les orifices 27 peuvent être moulés dans les régions de la partie rigide 44 adjacente à ces parties souples 69.

Alternativement, la partie rigide 40 peut être continue sur la totalité de la longueur du brin bi-injecté 20. Dans ce cas les orifices 27 sont moulés dans la portion intermédiaire 44 de la partie rigide 40.

D'autres modes de réalisation du brin bi-injecté 20 sont possibles. Par exemple, la portion de contact 42 de la partie rigide 40 du brin bi-injecté 20 peut se prolonger transversalement par une languette qui s'étend longitudinalement tout le long du brin bi-injecté, et qui forme sensiblement un "U" avec la portion de contact 42 et la portion intermédiaire 44. Cette languette contribue donc à maintenir le brin extrudé 10 en place contre la portion de contact 42.

## Revendications

1. Joint d'étanchéité (1) de portière **caractérisé en ce qu'**il comprend un brin extrudé (10) flexible s'étendant au moins le long d'une partie de la portière lorsque cette portière est fermée, ledit joint comprenant en outre un brin supplémentaire (20) situé sur ledit bord supérieur (70) de la portière et comportant une partie rigide (40) et une partie souple (60), ladite partie souple comportant une première lèvre (61) apte à s'appuyer sur ladite portière et une seconde lèvre (62) apte à s'appuyer sur le bord d'un cadre (80) entourant ladite portière lorsque cette portière est fermée, ladite première et ladite seconde lèvre formant une gouttière apte à évacuer un fluide vers les extrémités du bord supérieur (70) de la portière, de telle sorte que l'étanchéité entre cette portière et ce cadre est maintenue.

2. Joint d'étanchéité (1) de portière selon la revendication 1, **caractérisé en ce que** ledit brin supplémentaire est un brin bi-injecté (20) définissant ladite partie rigide (40) et ladite partie souple (60).

3. Joint d'étanchéité (1) de portière selon la revendication 1 ou 2, **caractérisé en ce que** le brin extrudé (10) flexible s'étend sur tout le tour de la portière.

4. Joint d'étanchéité (1) de portière selon l'une quelconque des revendications 1 à 3, **caractérisé en ce que** ledit brin extrudé (10) flexible est monté sur la portière.

5. Joint d'étanchéité (1) de portière selon l'une quelconque des revendications 1 à 3, **caractérisé en ce que** ledit brin extrudé (10) flexible est monté sur ledit cadre (80).

6. Joint d'étanchéité (1) de portière selon l'une quelconque des revendications 1 à 5, **caractérisé en ce qu'**une extrémité dudit brin supplémentaire (20) se prolonge par un troisième segment (30) qui prolonge la partie souple (60) dudit brin supplémentaire (20) et qui longe un des montants de la portière.

7. Joint d'étanchéité (1) de portière selon l'une quelconque des revendications 1 à 6, **caractérisé en ce que** ladite partie rigide (40) dudit brin supplémentaire (20) comprend une portion de contact (42) qui est destinée à être placée contre le bord supérieur (70) de la portière et à être recouverte par ledit brin extrudé (10).

8. Joint d'étanchéité (1) de portière selon la revendication 7, **caractérisé en ce que** ladite portion de contact (42) de la partie rigide (40) du brin supplémentaire (20) est fixée sur le bord supérieur (70) de la portière par une liaison mécanique.

9. Joint d'étanchéité (1) de portière selon la revendication 8, **caractérisé en ce que** ladite portion de contact (42) de la partie rigide (40) du brin supplémentaire (20) est percée de trous (43) destinés à recevoir des clips (90) aptes à maintenir ladite portion de contact (42) plaquée contre le bord supérieur (70) de la portière, et aptes à maintenir ledit brin extrudé (10) contre ladite portion de contact (42).

10. Joint d'étanchéité (1) de portière selon la revendication 8, **caractérisé en ce que** ladite portion de contact (42) de la partie rigide (40) du brin supplémentaire (20) comprend des éléments en forme de clips aptes à maintenir ladite portion de contact (42) plaquée contre le bord supérieur (70) de la portière, et aptes à maintenir ledit brin extrudé (10) contre ladite portion de contact (42).

11. Joint d'étanchéité (1) de portière selon l'une quelconque des revendications 7 à 10, **caractérisé en ce que** ladite portion de contact (42) de la partie rigide (40) du brin supplémentaire (20) est collée contre le bord supérieur (70) de la portière.

12. Joint d'étanchéité (1) de portière selon l'une quelconque des revendications 1 à 11, **caractérisé en ce que** la partie dudit brin bi-injecté (20) destinée à être placée en regard du coin supérieur avant (73) de la portière et l'extrémité du brin bi-injecté (20) destinée à être placée vers l'arrière de la portière sont munis d'orifices (27) aptes à recevoir un outil servant à positionner ledit brin supplémentaire (20) sur la portière.

## Patentansprüche

1. Dichtung (1) für eine Tür, **dadurch gekennzeichnet, dass** sie einen biegsamen extrudierten Abschnitt (10) umfasst, der sich mindestens entlang eines Teils der Tür erstreckt, wenn diese Tür geschlossen ist, wobei die Dichtung ferner einen zusätzlichen Abschnitt (20) umfasst, der sich auf dem oberen Rand (70) der Tür befindet und einen starren Teil (40) und einen biegsamen Teil (60) umfasst, wobei der biegsame Teil eine erste Lippe (61), die geeignet ist, sich an die Tür anzulegen, und eine zweite Lippe (62) umfasst, die geeignet ist, sich an den Rand eines Rahmens (80), der die Tür umgibt, anzulegen, wenn diese Tür geschlossen ist, wobei die erste und die zweite Lippe eine Rinne bilden, die geeignet ist, ein Fluid zu den Enden des oberen Randes (70) der Tür abzuleiten, so dass die Dichtigkeit zwischen dieser Tür und diesem Rahmen aufrecht bleibt.

2. Türdichtung (1) nach Anspruch 1, **dadurch gekennzeichnet, dass** der zusätzliche Abschnitt ein doppelt eingespritzter Abschnitt (20) ist, der den starren Teil (40) und den biegsamen Teil (60) definiert.

3. Türdichtung (1) nach Anspruch 1 oder 2, **dadurch gekennzeichnet, dass** sich der biegsame extrudierte Abschnitt (10) rund um die Tür erstreckt.

4. Türdichtung (1) nach einem der Ansprüche 1 bis 3, **dadurch gekennzeichnet, dass** der biegsame extrudierte Abschnitt (10) auf der Tür montiert ist.

5. Türdichtung (1) nach einem der Ansprüche 1 bis 3, **dadurch gekennzeichnet, dass** der biegsame extrudierte Abschnitt (10) auf dem Rahmen (80) montiert ist.

6. Türdichtung (1) nach einem der Ansprüche 1 bis 5, **dadurch gekennzeichnet, dass** sich ein Ende des zusätzlichen Abschnitts (20) durch ein drittes Segment (30) verlängert, das den biegsamen Teil (60) des zusätzlichen Abschnitts (20) verlängert und einen der Ständer der Tür beherbergt.

7. Türdichtung (1) nach einem der Ansprüche 1 bis 6, **dadurch gekennzeichnet, dass** der starre Teil (40) des zusätzlichen Abschnitts (20) einen Kontaktabschnitt (42) umfasst, der dazu bestimmt ist, am oberen Rand (70) der Tür angeordnet und vom extrudierten Abschnitt (10) bedeckt zu werden.

8. Türdichtung (1) nach Anspruch 7, **dadurch gekennzeichnet, dass** der Kontaktabschnitt (42) des starren Teils (40) des zusätzlichen Abschnitts (20) am oberen Rand (70) der Tür durch eine mechanische Verbindung befestigt ist.

9. Türdichtung (1) nach Anspruch 8, **dadurch gekennzeichnet, dass** der Kontaktabschnitt (42) des starren Teils (40) des zusätzlichen Abschnitts (20) mit Löchern (43) durchbohrt ist, die dazu bestimmt sind, Clips (90) aufzunehmen, die geeignet sind, den Kontaktabschnitt (42) an den oberen Rand (70) der Tür gedrückt zu halten und den extrudierten Abschnitt (10) am Kontaktabschnitt (42) zu halten.

10. Türdichtung (1) nach Anspruch 8, **dadurch gekennzeichnet, dass** der Kontaktabschnitt (42) des starren Teils (40) des zusätzlichen Abschnitts (20) Elemente in Form von Clips umfasst, die geeignet sind, den Kontaktabschnitt (42) an den oberen Rand (70) der Tür gedrückt zu halten und den extrudierten Abschnitt (10) am Kontaktabschnitt (42) zu halten.

11. Türdichtung (1) nach einem der Ansprüche 7 bis 10, **dadurch gekennzeichnet, dass** der Kontaktabschnitt (42) des starren Teils (40) des zusätzlichen Abschnitts (20) an den oberen Rand (70) der Tür geklebt ist.

12. Türdichtung (1) nach einem der Ansprüche 1 bis 11, **dadurch gekennzeichnet, dass** der Teil des doppelt eingespritzten Abschnitts (20), der dazu bestimmt ist, gegenüber der vorderen oberen Ecke (73) der Tür angeordnet zu werden, und das Ende des doppelt eingespritzten Abschnitts (20), das dazu bestimmt ist, nach hinten zur Tür angeordnet zu werden, mit Öffnungen (27) versehen sind, die geeignet sind, ein Werkzeug aufzunehmen, das dazu dient, den zusätzlichen Abschnitt (20) auf der Tür zu positionieren.

## Claims

1. A door weatherstrip (1), **characterized in that** it comprises a flexible extruded strand (10) extending at least along a portion of the door when the door is closed, said weatherstrip further including an additional strand (20) situated on said top edge (70) of the door and comprising a rigid portion (40) and a pliable portion (60), said pliable portion comprising a first lip (61) suitable for pressing against said door and a second lip (62) suitable for pressing against the edge of a frame (80) surrounding said door when the door is closed, said first and second lips forming a gutter suitable for evacuating a fluid towards the ends of the top edge (70) of the door, so that sealing between the door and the frame is maintained.

2. A door weatherstrip (1) according to claim 1, **characterized in that** said top strand is a bi-injected strand (20) defining said rigid portion (40) and said pliable portion (60).

3. A door weatherstrip (1) according to claim 1 or claim 2, **characterized in that** the flexible extruded strand (10) extends all around the door.

4. A door weatherstrip (1) according to any one of claims 1 to 3, **characterized in that** said flexible extruded strand (10) is mounted on the door.

5. A door weatherstrip (1) according to any one of claims 1 to 3, **characterized in that** said flexible extruded strand (10) is mounted on said frame (80).

6. A door weatherstrip (1) according to any one of claims 1 to 5, **characterized in that** one end of said additional strand (20) is extended by a third segment (30) that extends the pliable portion (60) of said additional strand (20) and that runs along one of the uprights of the door.

7. A door weatherstrip (1) according to any one of claims 1 to 6, **characterized in that** said rigid portion (40) of said additional strand (20) includes a contact part (42) that is for placing against the top edge (70) of the door and that is for being covered by said extruded strand (10).

8. A door weatherstrip (1) according to claim 7, **characterized in that** said contact part (42) of the rigid portion (40) of the additional strand (20) is fastened on the top edge (70) of the door by a mechanical connection.

9. A door weatherstrip (1) according to claim 8, **characterized in that** said contact part (42) of the rigid portion (40) of the additional strand (20) is pierced by holes (43) for receiving clips (90) suitable for holding said contact part (42) pressed against the top edge (70) of the door, and suitable for holding said extruded strand (10) against said contact part (42).

10. A door weatherstrip (1) according to claim 8, **characterized in that** said contact part (42) of the rigid portion (40) of the additional strand (20) includes clip-forming elements suitable for holding said contact part (42) pressed against the top edge (70) of the door, and suitable for holding said extruded strand (10) against said contact part (42).

11. A door weatherstrip (1) according to any one of claims 7 to 10, **characterized in that** said contact part (42) of the rigid portion (40) of the additional strand (20) is adhesively bonded to the top edge (70) of the door.

12. A door weatherstrip (1) according to any one of claims 1 to 11, **characterized in that** the portion of said bi-injected strand (20) that is for placing facing the top front corner (73) of the door and the end of the bi-injected strand (20) that is for placing towards the rear of the door are provided with orifices (27) suitable for receiving a tool serving to position said additional strand (20) on the door.
